# EUROPEAN PATENT SPECIFICATION

(11) **EP 3 961 892 B1**
(45) Date of publication and mention of the grant of the patent: **22.01.2025**
(21) Application number: 21161164.5
(22) Date of filing: 08.03.2021
(51) Int. Cl.: H02M 1/42, H02M 1/00, H05B 45/38, H05B 45/3725, H05B 45/10, H05B 45/14, H05B 41/292, H02M 3/158

(54) **LED CONVERTER**
LED-WANDLER
CONVERTISSEUR À DEL

(30) Priority: 01.09.2020 EP 20193792
(43) Date of publication of application: 02.03.2022
(73) Proprietor: Tridonic GmbH & Co. KG, 6851 Dornbirn (AT)
(72) Inventor: Netzer, Harald, 6850 Dornbirn (AT); Egle, Manuel, 6850 Dornbirn (AT); Auer, Hans, 6850 Dornbirn (AT); Saccavini, Lukas, 6850 Dornbirn (AT); Stark, Stefan, 6850 Dornbirn (AT)
(74) Representative: Rupp, Christian

(56) References cited:
- EP-A1- 2 388 902
- EP-A1- 3 043 624
- US-A- 5 569 984

## Description

### TECHNICAL FIELD OF THE INVENTION

The invention relates to an LED converter for supplying an LED load. The invention further relates to a method for supplying an LED load.

### BACKGROUND OF THE INVENTION

In general, LED current sources used in LED gears can be DC/DC converters (half bridge LLC, buck, flyback, etc.) that operate at a certain working frequency usually in the range between 40 kHz and 250 kHz. However, although the LED output current is essentially a DC current, a certain AC ripple may remain. This ripple has different frequency parts: there is a low frequency ripple (mainly at 100 Hz) as well as a high frequency ripple which has the current source operating frequency (40 kHz to 250 kHz, depending on the design and the working point). In order to control the current source, a control loop can be implemented which measures the LED current and controls the switches of the current source (e.g., in a half bridge LLC topology, the frequency of the half bridge is varied) in order to reach the desired target output current.

Measuring of the LED current (or another quantity that represents the LED current) can be done by sampling it with an analog to digital converter (ADC). Samples are taken at a fixed sampling frequency. In some cases, this sampling frequency can be at about 312.5 kHz (corresponding to 3.2 us sampling period). As in these designs the maximum operating frequency is at about 250 kHz, the sampling frequency is much higher than the working frequency.

However, the sampling frequency of the LED current according to the invention can be at lower frequencies between e.g. 50 and 150 kHzand thus in the range of a working frequency of the LED current sources, which can be in the range of 40 kHz to 250 kHz.

In particular, the potential problem of aliasing occurs if the working frequency (and correspondingly the ripple on the LED current representing signal which is sampled) is close to the sampling frequency.

In general, the sampling frequency should be much higher than the working frequency, at least factor of 2, preferably a factor of 10, and this is called oversampling. In this case, the sampled signal (discrete signal) does well represent the real signal (analog signal). If the sampling frequency is below the working frequency, so-called undersampling, a reconstruction of the measured signal is not possible.

This problem is not that critical in certain LED gears in which the signal which is sampled (sensed LED current) is essentially a DC voltage which has only a small AC part. Therefore, it might be negligible if the AC part is not measured correctly.

However, problems can occur at low dim levels where the LED current,and, therefore, the DC voltage that represents the LED current, which is sampled by the ADC converter, is very low. In this case, the AC part has more influence and measurement errors caused by undersampling and aliasing may lead to light flicker problems. Such a low frequent aliasing signal (e.g., 200 Hz or below) can influence the LED current controller, since the controller will react to the signal,which is not really existing, and try to eliminate it. Therefore, flicker problems can occur.

An LED power supply comprising a PFC and a DC/DC converter is disclosed, for example, in EP3043624. Frequency sweeping for suppressing flicker is proposed in US5569984.

Thus, it is an objective to provide an improved LED converter, which, in particular, avoids the above mentioned problem of flicker.

### SUMMARY OF THE INVENTION

The object of the present invention is achieved by the solution provided in the enclosed independent claims. Advantageous implementations of the present invention are further defined in the dependent claims.

According to a first aspect, the invention relates to a LED converter, according to claim 1.

The switching frequency of the DC/DC switched converter may be in the order of 40kHz to 250kHz. The sampling frequency may be in the range of 50kHz to 260kHz, preferably 70kHz to 120 kHz.

The difference set by the converter may be between 10% and 40%, preferably 20% and 30% of the switching frequency.

The difference set by the converter may be between 20kHz and 60khz, preferably between 30khz and 50kHz.

Preferably the sampling frequency is higher than the switching frequency, but may be also be lower.

This provides the advantage that flicker problems of the LED load are avoided by better separating the switching and sampling frequencies.

In an embodiment, the output voltage of the PFC circuit is controlled by a PFC control unit such that the resulting switching frequency is higher than a second preset value or the switching frequency of the switched DC/DC converter is controlled to deviate from a frequency value of the sampling frequency of the means for sampling by a predetermined value.

This provides the advantage that flicker problems of the LED load are avoided.

In an embodiment, the output DC voltage of the PFC circuit is controlled by the PFC control unit such that an artificial ripple, e.g. a triangular ripple, is added to the output DC voltage.

This provides the advantage that flicker problems may be avoided by adapting a simple solution, such as an artificial ripple.

In an embodiment, the output DC voltage of the PFC circuit is controlled by the PFC control unit such that the output DC voltage of the PFC circuit is kept constant while the switching frequency of the DC/DC switched converter is modulated accordingly.

In an embodiment, the DC/DC converter is a half-bridge LLC, flyback or buck converter.

This provides the advantage that well known converter topologies can be used.

In an embodiment, the means for sampling comprises an analog-to-digital, ADC, converter.

This provides the advantage that a well-known converter topologies can be used.

In an embodiment, the LED converter comprises an electromagnetic interference, EMI, filter.

In an embodiment, the LED converter comprises an isolation stage.

In an embodiment, the LED converter comprises a rectifying and sensing unit on a secondary side of the isolation stage configured to rectify and sense a current supplied to the LED load.

According to a second aspect, the invention relates to a luminaire comprising the LED converter according to the first aspect or any one of the embodiments thereof.

According to a third aspect, the invention relates to a method for supplying an LED load, according to claim 9.

### BRIEF DESCRIPTION OF THE DRAWINGS

The invention will be explained in the followings together with the figures.
- Fig. 1: shows a schematic representation of a LED converter according to an embodiment;
- Fig. 2: shows a schematic representation of a LED converter according to an embodiment;
- Fig. 3: shows a schematic representation of signals of a LED converter according to an embodiment;
- Fig. 4: shows a schematic representation of signals of a LED converter according to an embodiment;
- Fig. 5: shows a schematic representation of a LED converter according to an embodiment;
- Fig. 6: shows a schematic representation of a LED converter according to an embodiment;
- Fig. 7: shows a schematic representation of a LED converter according to an embodiment;
- Fig. 8: shows a schematic representation of a LED converter according to an embodiment;
- Fig. 9: shows a schematic flowchart of a method for supplying an LED load according to an embodiment;
- Fig. 10: shows a schematic flowchart of a method for supplying an LED load according to an embodiment;
- Fig. 11: shows a schematic flowchart of a method for supplying an LED load according to an embodiment; and
- Fig. 12: shows a schematic flowchart of a method for supplying an LED load according to an embodiment.

### DETAILED DESCRIPTION OF THE PREFERRED EMBODIMENTS

Aspects of the present invention are described herein in the context of a LED converter .

The present invention is described more fully hereinafter with reference to the accompanying drawings, in which various aspects of the present invention are shown. This invention however may be embodied in many different forms and should not be construed as limited to the various aspects of the present invention presented through this disclosure. Rather, these aspects are provided so that this disclosure will be thorough and complete, and will fully convey the scope of the present invention to those skilled in the art. The various aspects of the present invention illustrated in the drawings may not be drawn to scale. Rather, the dimensions of the various features may be expanded or reduced for clarity. In addition, some of the drawings may be simplified for clarity. Thus, the drawings may not depict all of the components of a given apparatus.

Various aspects of a LED converter will be presented. However, as those skilled in the art will readily appreciate, these aspects may be extended to aspects of LED converters without departing from the invention.

The term "LED luminaire" shall mean a luminaire with a light source comprising one or more LEDs or OLEDs. LEDs are well-known in the art, and therefore, will only briefly be discussed to provide a complete description of the invention.

It is further understood that the aspect of the present invention might contain integrated circuits that are readily manufacturable using conventional semiconductor technologies, such as complementary metal-oxide semiconductor technology, short "CMOS". In addition, the aspects of the present invention may be implemented with other manufacturing processes for making optical as well as electrical devices. Reference will now be made in detail to implementations of the exemplary aspects as illustrated in the accompanying drawings. The same references signs will be used throughout the drawings and the following detailed descriptions to refer to the same or like parts.

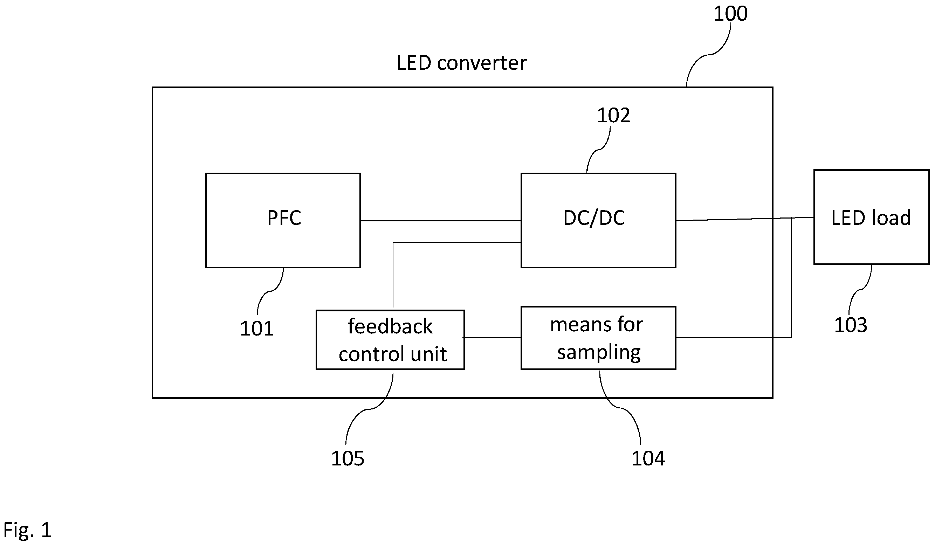

Now referring to Fig. 1, a LED converter 100 is shown according to an embodiment.

The LED converter 100 comprises a PFC circuitry 101a DC/DC converter 102, a feedback control unit 105 and a means for sampling 104

The LED converter 100 comprises an actively switched power factor correction, PFC, circuit 101 configured to output a DC voltage. This DC voltage is a DC supply voltage of the switched DC/DC converter 102, which is configured to supply an LED load 103 with a feedback controlled output current.

Moreover, the LED converter 100 comprises a means for sampling 104 a value representing the output current with a sampling frequency and for supplying it to a feedback control unit 105 which is configured to issue a control signal for at least one switch of the switched DC/DC converter 102. The PFC circuit 101 and the switched converter 102 are designed such that a difference between a switching frequency of the DC/DC switched converter 102 and the sampling frequency of the means for sampling 104 is higher than a first preset value.

This provides the advantage that flicker problems of the LED load 103 are avoided, because the switching frequency and the sampling frequency can be better separated.

In an embodiment, the output voltage of the PFC circuit 101 is controlled by a PFC control unit or microcontroller or ASIC such that the resulting switching frequency is higher than a second preset value or the switching frequency of the switched DC/DC converter 102 is controlled to deviate from a frequency value of the sampling frequency of the means for sampling 104 by a predetermined value.

This provides the advantage that flicker problems of the LED load are avoided.

Advantageously, the LED converter 100 mitigates aliasing problems (which cause light flicker) by either statically changing the current source working frequency or dynamically modulating the current source working frequency at low dim levels. This change of current source working frequency can be done, for example, by a modulation added on the bus voltage (V_{bus}) which is the input voltage for the LED current source stage (e.g., half bridge LLC). This is, mainly, done at low dim levels, because there the AC ripple on the bus voltage is usually very low and, so, an artificial ripple is added (modulated) in order to avoid static aliasing frequencies.

Without a ripple on the bus voltage, the working frequency of the current source would be constant, if a constant ambient temperature and LED voltage are assumed. For example, if the working frequency is at 100.4 kHz and the sampling frequency at 100.6 kHz, the 200 Hz aliasing can occur. If a ripple is added to the bus voltage, the working frequency of the current source will vary (as a controller comprised in the LED converter 100 needs to modify it due to the varying bus voltage). In this case, no static 200 Hz aliasing occurs which is shown to have positive influence on the light flicker behavior.

Another possibility is to change the current source working frequency statically. In this case, the bus voltage is either increased or decreased (e.g., from the usually used 405 V to 415 V) in order to change the current source working frequency. Also, in this case, no low frequent aliasing occurs which is shown to have positive influence on the light flicker behavior.

The working frequency is, usually, known very accurately (low tolerance influences). The sampling frequency is known very accurate as well, because it is fixed in the ASIC design. Therefore, the controller or microcontroller could be configured to calculate the difference between current source working frequency and ADC sampling frequency, and interfere by adding a V_{bus} modulation, changing the V_{bus} level, or another means that changes the current source working frequency, if the difference gets too low and, therefore, potential flicker problems might arise.

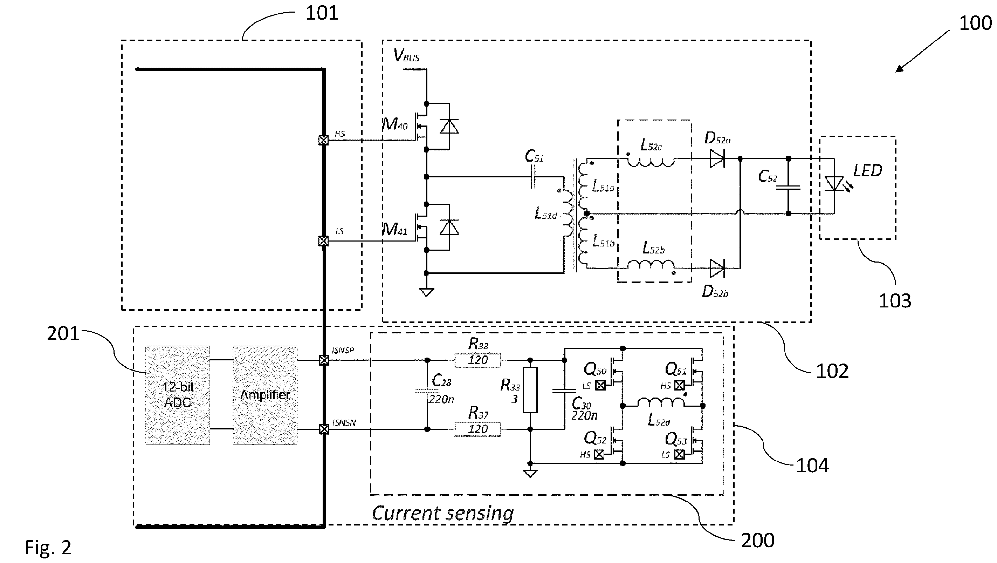

Fig. 2 shows a schematic representation of the LED converter 100 according to an embodiment.

In particular, Fig. 2 shows a commonly used half bridge LLC circuit as DC/DC converter 102. The power components as well as components used for output current sensing are shown. The power circuitry comprises the half bridge FETs M40 and M41, LLC resonance tank consisting of resonance capacitor C51 and resonance inductance which is the leakage inductance of L51, LLC transformer with primary winding L51d and secondary windings L51a and L51b, secondary side rectifier diodes D52a and D52b and output filter capacitor C52.

The output current sensing circuitry 200, comprised in the means for sampling 104,comprises current sensing transformer L52, with windings L52c and L52b in the power path (sensing the output current which splits through D52a and D52b) and winding L52a in the sensing path, rectifier FETs Q50 to Q53, buffer capacitor C30, shunt resistor R33 and (in this embodiment differential) RC filter consisting of R37, R38 and C28. The sensed and filtered (averaged) voltage between ISNSP and ISNSN, then, is amplified and sampled by an ADC converter 201 comprised in the means for sampling 104.

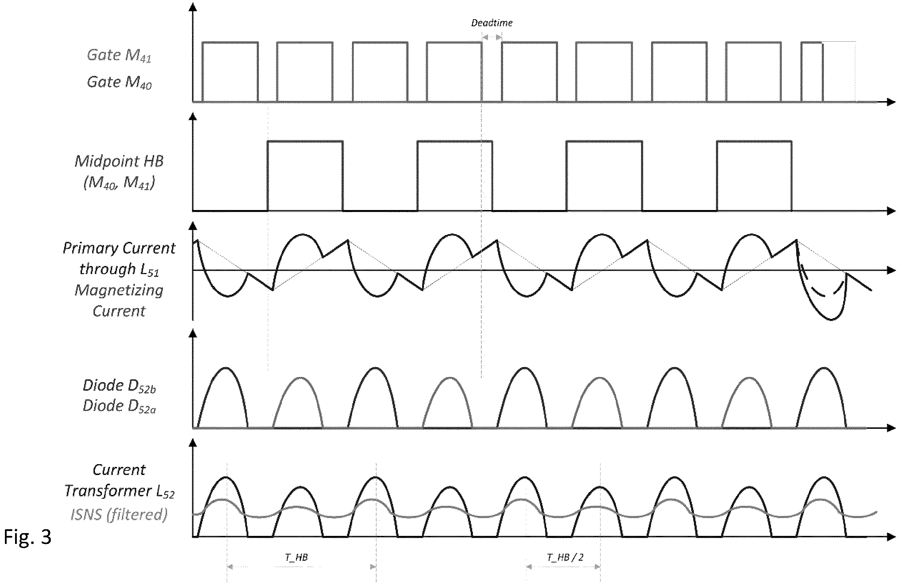

Figure 3 shows the corresponding waveforms of the LED converter 100 shown in Fig. 2.

From top to bottom, in the first subplot, the gate signals of the two half bridge FETs M40 and M41 are shown.

In the second subplot, the half bridge middle point voltage is shown.

The third subplot shows the LLC primary side current, so the current flowing from the half bridge middle point into the resonance capacitor C51.

The fourth subplot shows the secondary side currents through the rectifier diodes D52a and D52b.

Finally, the last subplot shows the sensed and rectified output current (current through D52a and D52b, sensed with current transformer L52 and rectified) as well as its filtered version (ISNS) which is fed to the controller or ASIC.

In this example, the currents through the rectifier diodes D52a and D52b have different amplitudes. This is caused by different inductive couplings from LLC transformer primary winding L51d to the two secondary windings L51a and L51b. If the coupling from the primary winding to both secondary windings was the same, then, the current amplitudes would be the same. In reality, a small difference in amplitudes may occur as the two couplings will not match perfectly. Therefore, when observing the filtered signal ISNS, it can be seen that, essentially, two frequencies are present: the half bridge frequency (or period T_HB) and the double half bridge frequency (or the half period T_HB / 2).

The mentioned aliasing problem occurs if the sampling frequency of the ADC 201 is very close to either the half bridge frequency or the double half bridge frequency.

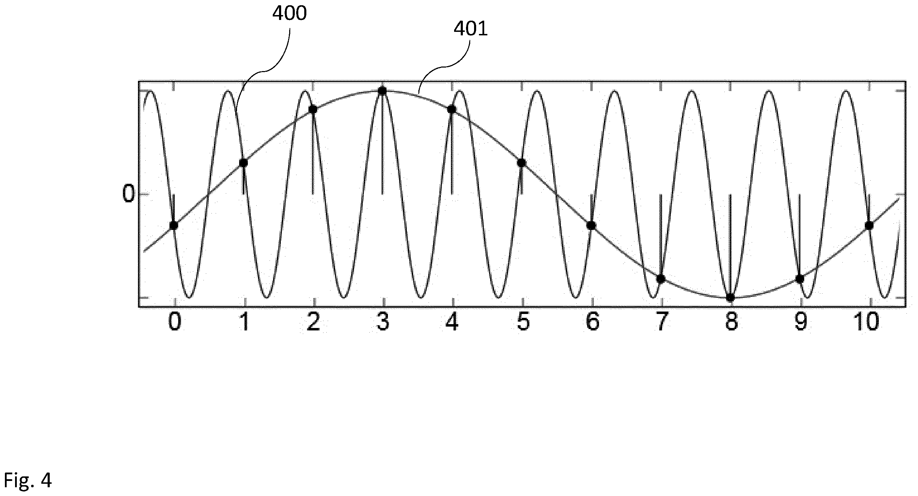

This is further explained using Figure 4.

In this example, a sinusoidal signal 400 with a certain frequency f_signal is sampled with a sampling frequency f_sampling (indicated by the sample numbers on the x-axis, as well as by the black dots) which is only slightly above the signal frequency. When the individual sample points are connected (reconstruction of a sinusoidal signal 401), the signal 401 is shows up which has a very low frequency compared to the actual signal frequency f_signal. It has the frequency f_aliasing = f_sampling - f_signal. It can be seen that, if the sampling frequency was much larger than the signal frequency (e.g., f_sampling = 10*f_signal, so 10 black dots will appear on the signal 400 during one period), the line 401 (measured and reconstructed signal) and the signal 400 would match.

For the LED gear problem this means the following. Assuming that the signal 400 has a very low frequent ripple on the ISNS signal (not the half bridge period or half of it, but for example 10 Hz or so). In this case, with a sampling rate of about 100 kHz, many sampling points during one (10 Hz) period of the low frequent ripple are available. This means that the LED current controller can easily compensate this low frequent ripple (as the ripple can be measured perfectly with the high sampling rate of 100 kHz). In case this mentioned ripple on the ISNS signal has a higher frequency, for example in the range of the sampling rate, then the same problem as indicated in Fig. 4 will occur. The LED current controller is run with every new ADC sample. That means that the LED current controller will see that the measurement value (black dots, line 401 in Fig. 4) changes with a low frequency (f_aliasing = f_sampling - f_ripple_on_isns) and, if this low frequency is low enough, that the controller can compensate it. The LED current controller will react and try to compensate the low frequent ripple (which is not really existing but just an artefact which occurs due to the mismatch of sampling and signal ripple frequency). When the difference between the sampling frequency and the frequency of the ripple on the ISNS signal gets above e.g. 1 kHz, the reaction of the LED current controller (e.g., PI controller) will be low as the controller is optimized for slower fluctuations. Therefore, the worst case for this problem is when the aliasing frequency f_aliasing = f_sampling - f_ripple_on_isns is very low, for example, when the ripple frequency is slightly above or below the sampling frequency (e.g., only 100 Hz difference).

The above mentioned problems can be avoided, as elucidated in the following. By varying the bus voltage, either statically (set the nominal voltage level from e.g. 400 VDC to a higher or lower level) or dynamically (add an artificial ripple to the 400 VDC bus voltage) the half bridge frequency, and, therefore, the ripple on the ISNS signal, changes and correspondingly the difference between the sampling frequency and this ripple frequency changes. This change needs to be done in such a way that this mentioned aliasing frequency f_aliasing increases so that the LED current controller will not react to it.

In some embodiments, the ADC sampling frequency is rather low at about 100.6 kHz. Usually, the sampling frequency should be at least a factor of 2 higher than the highest frequency present in the measurement signal (which in our case is a signal that represents the LED current). The sampling frequency of about 100.6 kHz is in the middle of the DC/DC converter working frequency range (which is approximately between 40 kHz and 250 kHz). The signal that represents the LED current is sampled by the ADC 201. This signal is more or less a DC voltage. Nevertheless, it contains an AC ripple part which has the working frequency of the DC/DC converter 102. A problem occurs if the working frequency is, e.g., at 100.8 kHz (or, in general, very close to the ADC sampling frequency of 100.6 kHz). The system (namely the control loop of the DC/DC converter 102, consisting of the ADC 201 and the PI controller) in this case assumes that the LED current contains a 200 Hz ripple (= 100.8 kHz - 100.6 kHz) which it tries to compensate.

The problem is that this 200 Hz ripple is just an artefact that occurs due the performed undersampling. If the controller tries to compensate the not existing 200 Hz ripple, then a light flicker occurs. If the working frequency is further away from the ADC sampling frequency, e.g. more than 1 kHz, this problem is less critical because, e.g. at 1 kHz frequency difference, the not existing ripple has a frequency of 1 kHz which cannot be compensated by the rather slow PI controller.

In general, such working points (of the DC/DC converter 102) should be avoided in which the working frequency is very close to the ADC sampling frequency (e.g., the two frequencies should not be closer to each other than 1 kHz) and the LED current is low, because at low LED currently light flicker is more likely to be visible. Therefore, the goal is to detect such critical working points (preferably in an automated way directly by the microcontroller within the LED gear) and, then, to modify the whole system comprising the AC/DC converter and DC/DC converter 102 in order to avoid the critical working point. The modification aims to change the working frequency of the DC/DC converter 102 to bring the working frequency with some reserve e.g. 1 kHz above or below the ADC sampling frequency. In the simplest way, this can be achieved by changing the input voltage of the DC/DC converter 102. In our case, this is the bus voltage provided by the AC/DC (PFC) stage 101.

Therefore, if the DC/DC converter 102 ends up in such a critical working point (determined by the LED current and LED voltage), the bus voltage can be increased (or decreased) either statically (e.g., from 405 V average value to 415 V), or an artificial ripple is added to the bus voltage (similar to the already known DC sweep) so that the DC/DC working frequency is not permanently very close to the ADC sampling frequency. So in a preferred embodiment, the DC/DC working frequency is indirectly modified by changing the output of the AC/DC (PFC) stage 101 whenever a critical DC/DC working frequency (which is too close to the ADC sampling frequency) would occur. If the DC/DC working frequency is directly modulated, at constant bus voltage, the ripple on the LED current would be increased.

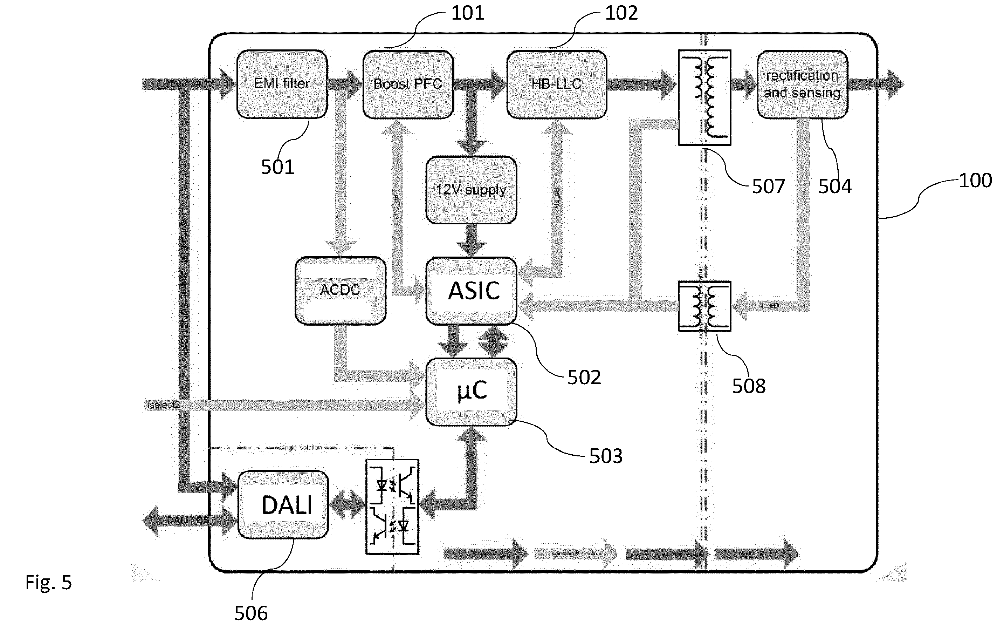

Figure 5 shows a block diagram of an LED gear or LED converter 100 in which the invention can be applied.

The mains voltage (e.g. 230V/ 50Hz) can be rectified and filtered by the block "EMI filter" 501. The block "Boost PFC" 101 provides a DC bus voltage of e.g. 405 V at its output (pVbus). The EMI filter 501 and boost PFC together form an AC/DC converter. The bus voltage supplies the DC/DC converter 102 which drives the LED load 103. In this case, the DC/DC converter 102 is a half-bridge LLC topology, but also other topologies such as e.g. flyback or buck converter are possible.

In case of half-bridge LLC (HB-LLC), the secondary side voltage of the LLC transformer 507 can be rectified in unit 504 and the LED output current can be sensed with, e.g., a current sense transformer 508. The obtained signal that represents the LED current can be fed to the ASIC 502 which contains the control loop for both the boost PFC 101 as well as the half-bridge LLC. A microcontroller 503 (uC block) can support several interfaces to the outside (e.g., DALI bus) and can configure the ASIC 502 depending on the desired LED current.

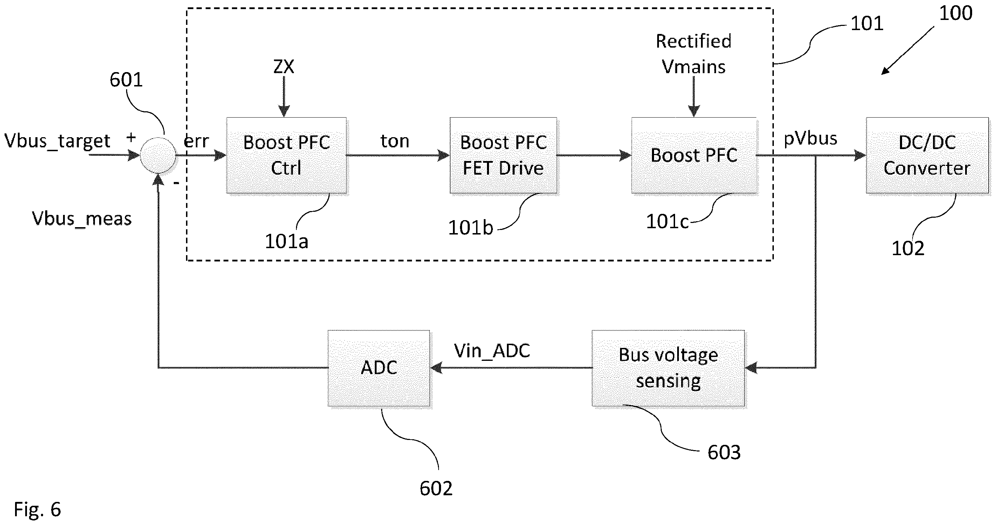

Figure 6 shows the boost PFC control loop of the PFC circuit 101 according to an embodiment.

A target bus voltage can be set by the microcontroller 503 (e.g., 405 VDC). It is compared in unit 601 to the sensed bus voltage and fed to a Boost PFC Ctrl block 101a. The sensing of the bus voltage pVbus is done, e.g., with an external voltage divider 603 and an ADC 602 within the ASIC 502. The control loop in Boost PFC Ctrl unit 101a also obtains the boost PFC choke current zero cross (ZX) information. At its output, it delivers turn on times (ton) for the boost PFC switch. The block Boost PFC FET Drive 101b turns on/off the switch accordingly. The block Boost PFC 101c represents the actual boost PFC power circuit. Based on the working point (represented by the rectified mains input voltage as well as the load represented by the DC/DC converter stage 102), different turn on / off times of the boost PFC switch are required. In general, the control loop aims to obtain fixed pVbus values such as e.g. 405 VDC in all working points.

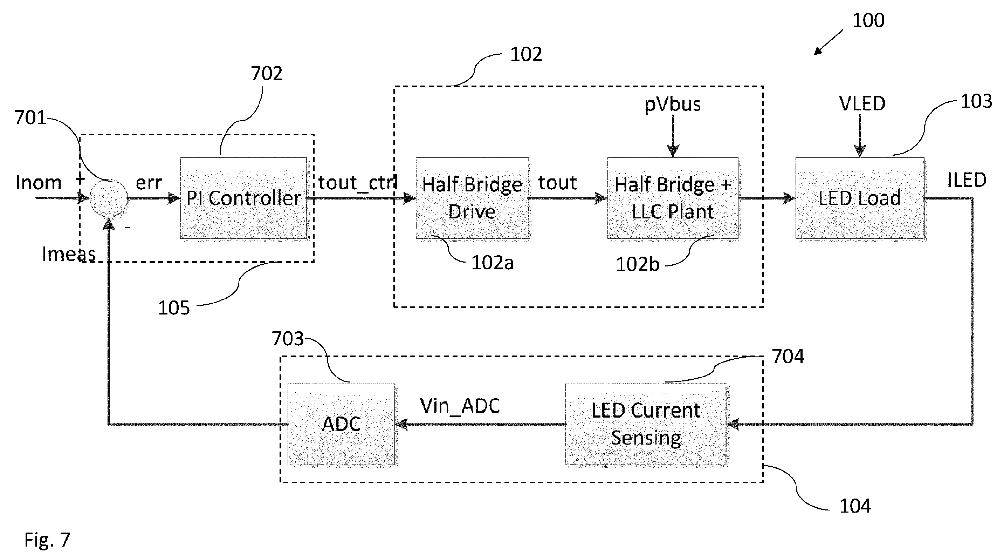

Figure 7 shows the control loop of the DC/DC stage (HB-LLC) 102 according to an embodiment.

A target LED current (Inom) can be set by the microcontroller 503. It is compared in unit 701 to the measured LED current Imeas. The measurement of the LED current is, for example, done by a current transformer 704 (with some other components for rectification and filtering of the sensed signal) and an ADC 703. In an embodiment, the LED current sensing unit 104 and the ADC converter 703 are comprised in the means for sampling 104. The control error (err) is fed to a PI controller 702. In an embodiment, the unit 701 and the PI controller 702 are comprised in the feedback control unit 105.

The PI controller 702 delivers a half bridge period time at its output, wherein the half-bridge operates with a constant duty cycle of, e.g., 50% and its frequency, or period, is varied. Based on this desired half-bridge period the block Half Bridge Drive 102a sets the turn on and off times of the two half bridge switches accordingly. Based on these turn on / off times and the input bus voltage pVbus, as well as based on the forward voltage of the connected LEDs (VLED), a certain LED current will flow. Which in turn is sensed and fed back to the control loop.

In an improved LED gear or LED converter 100 according to an embodiment, the scenario is as follows:
1) Boost PFC 101c (see Fig. 6) provides a fixed bus voltage pVbus of e.g. 405 VDC (average value);
2) Depending on the LED voltage and the desired LED current the DC/DC converter 102 will work at a certain working frequency in the range of, e.g., 40 kHz to 250 kHz;
3) In order for the LED current control loop to work, the LED current measurement signal is sampled by an ADC within the ASIC 502;
4) When the working frequency is very close to the means for sampling 104, e.g. an ADC, sampling frequency the problem explained above occurs;
5) The microcontroller 503 periodically monitors the DC/DC converter working frequency or switching frequency. The ADC sampling frequency is fixed and known to the microcontroller 503.

When these two frequencies get too close to each other the microcontroller 503 can react in, e.g., three possible ways (three alternatives):
a) Change the target bus voltage value of the boost PFC, e.g. increase it statically from 405 V to 415 V. In this case, the DC/DC converter working frequency or sampling frequency should change, because the input voltage of the DC/DC converter (pVbus) 102 changed and the LED current should remain the same. So, the two frequencies get separated again and the light flicker problem does not occur;
b) Add a low frequent ripple (e.g., 50 Hz) to the bus voltage by a modulation of the boost PFC working frequency or boost PFC switch ON time, e.g. add a triangular ripple to ON time.

In this case, the DC/DC converter working frequency will vary to compensate this ripple on pVbus. The DC/DC converter working frequency and the ADC sampling frequency will be separated most of the time (although they will be very close whenever the bus voltage is back at 405 V, but these are very short amounts of time). In such a way, the light flicker problem will likely not occur.

c) The bus voltage is not changed (boost PFC stage is not modified), but the working frequency of the DC/DC converter 102 is modulated. E.g., a triangular ripple is added to this frequency. In this case, the ripple on the LED current will be increased but the light flicker problem will likely not occur as the DC/DC converter working frequency and the ADC sampling frequency will be separated wide enough most of the time.

From these three alternatives, only the second case b) falls under the scope of protection delimited by the independent claims. The other cases a) and c) present general background information.

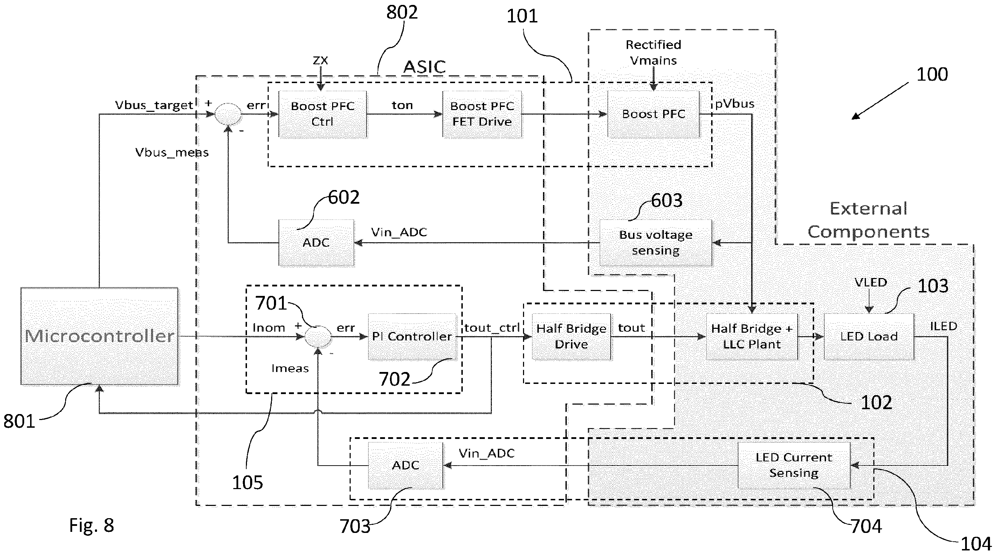

Figure 8 shows the relevant blocks of the overall control loop comprising the two above described control loops of a typical LED gear or LED converter 100 according to an embodiment.

The microcontroller 801 can provide several parameters to the ASIC 802. Two of them are shown: the Vbus_target (the target value of the boost PFC output voltage) and Inom (the target LED current). Additionally, the microcontroller 801 reads several feedback parameters from the ASIC 802. One of them is shown, namely tout_ctrl the target half bridge period time.

For example, the microcontroller 801 knows the ADC sampling frequency (or sampling period) of the ADC 703 utilized within the ASIC 802. So, whenever the two periods (or frequencies) are too close to each other (e.g., closer than a certain limit), the microcontroller 801 will modify the system. Preferably, the steps a) or b) (as described in the scenario above) are done.

Utilizing step a), the microcontroller 801 can statically change Vbus_target from its previous value (e.g., 405 VDC which is the typical nominal value) to another value which can be higher or lower, e.g. 415 VDC. In this case, the AC/DC (boost PFC) control loop will control the boost PFC circuit in order to reach that target voltage. So pVbus will change from 405 V to 415 V. As pVbus is the input voltage to the HB-LLC stage, the LED current control loop will react in order to compensate the change in pVbus. That means that tout_ctrl will change to another value in order to reach the same LED current at changed pVbus.

Utilizing step b), the microcontroller 801 or PFC control unit can vary Vbus_target, e.g., in a triangular way, to introduce an artificial ripple on the nominal 405 V bus voltage, e.g between 395 V and 415 V. In this case, pVbus will vary and, therefore, also tout_ctrl should vary to compensate this ripple on pVbus. It is obvious that these things can also be done directly by the ASIC 802 if no microcontroller 801 is used within the system. Instead of varying Vbus_target, the ripple on the bus voltage can also be introduced by directly adding a triangular ripple onto the boost PFC FET turn ON time (ton) .

Utilizing step c) the ASIC 802 can vary tout_ctrl directly in an, e.g., triangular (or sinusoidal, etc.) way. But as already mentioned with this approach (at constant pVbus) the ripple on ILED will be increased.

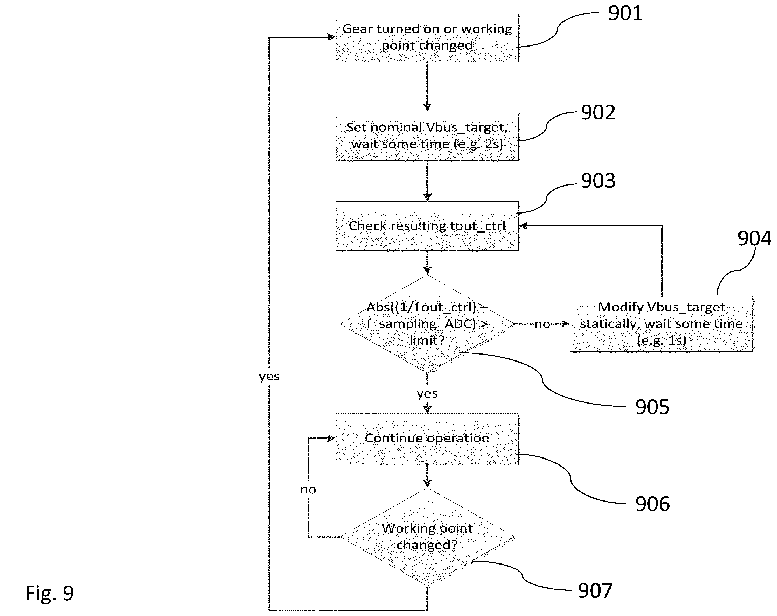

Figure 9 shows a possible operation flow chart in case step a) is used according to an embodiment.

When the gear or LED converter 100 is turned on, or a new working point (e.g., target LED current or changed LED voltage) is set by the user in step 901, first the nominal bus voltage is set in step 902. After some stabilization time, (e.g., 2s), the resulting working period (or working frequency) of the DC/DC converter 102 is checked in step 903.

If the absolute difference between the working frequency and the ADC sampling frequency is above a certain limit (e.g., 1,kHz) as in step 905, the operation is continued with these settings (nominal Vbus_target) in step 906. If the difference is below said limit, Vbus_target as in step 904 is either increased or decreased statically. After some stabilization time (e.g., 1s) in step 904 again the resulting working period/frequency is checked. The modification is done as long as the two frequencies are separated wide enough. Then, the operation is continued as long as the working point is changed by the user (or the gear is turned off) in step 907.

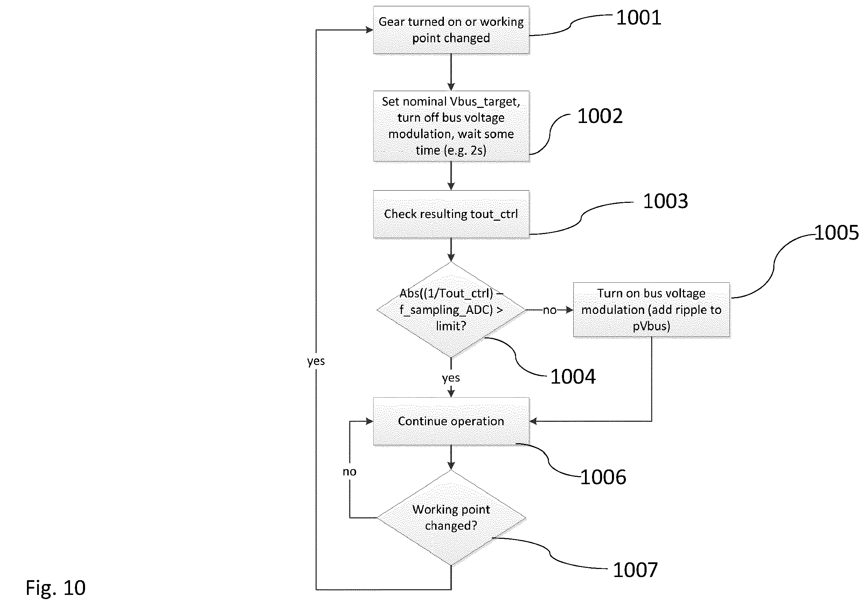

Figure 10 shows a possible operation flow chart in case step b) is used according to an embodiment.

When the gear is turned on, or a new working point (e.g., target LED current or changed LED voltage) is set by the user in step 1001, first the nominal bus voltage is set in step 1002. Additionally, any ongoing bus voltage modulation is turned off in step 1002. After some stabilization time (e.g., 2s), the resulting working period (or working frequency) of the DC/DC converter 102 is checked in step 1003. If the absolute difference between the working frequency and the ADC sampling frequency is above a certain limit (e.g., 1 kHz) in step 1004, then the operation is continued with these settings (nominal Vbus_target) in step 1006. If the difference is below said limit the modulation of the bus voltage is turned on in step 1005. The modulation is either done, e.g., by adding a ripple to Vbus_target (e.g., by the microcontroller 801), or directly by the ASIC 802 by modulating the boost PFC turn ON time. Afterwards, the operation is continued in step 1006 as long as the working point is changed by the user (or the gear is turned off) in step 1007.

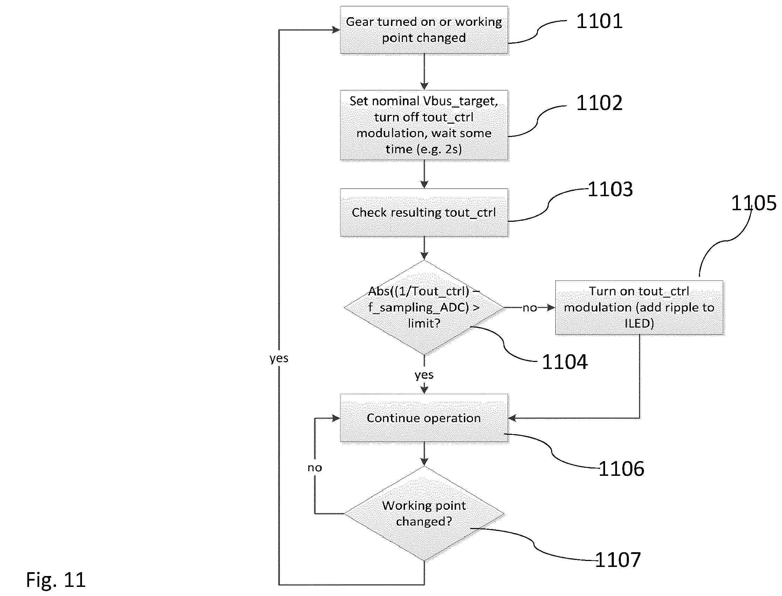

Figure 11 shows a possible operation flow chart in case step c) is used according to an embodiment.

When the gear is turned on, or a new working point (e.g. target LED current or changed LED voltage) is set by the user in step 1101, first the nominal bus voltage is set 1102. Additionally, any ongoing tout_ctrl modulation is turned off in step 1102. After some stabilization time (e.g., 2 s), the resulting working period (or working frequency) of the DC/DC converter 102 is checked 1103. If the absolute difference between the working frequency and the ADC sampling frequency is above a certain limit (e.g., 1 kHz) in step 1104, the operation is continued with these settings (nominal Vbus_target) in step 1106. If the difference is below said limit, the modulation of the DC/DC converter working period/frequency is turned on in step 1105. The modulation is done by adding a ripple (a sweep) to tout_ctrl, directly by the ASIC 802. Afterwards, the operation is continued in step 1106 as long as the working point is changed by the user (or the gear is turned off) in step 1107.

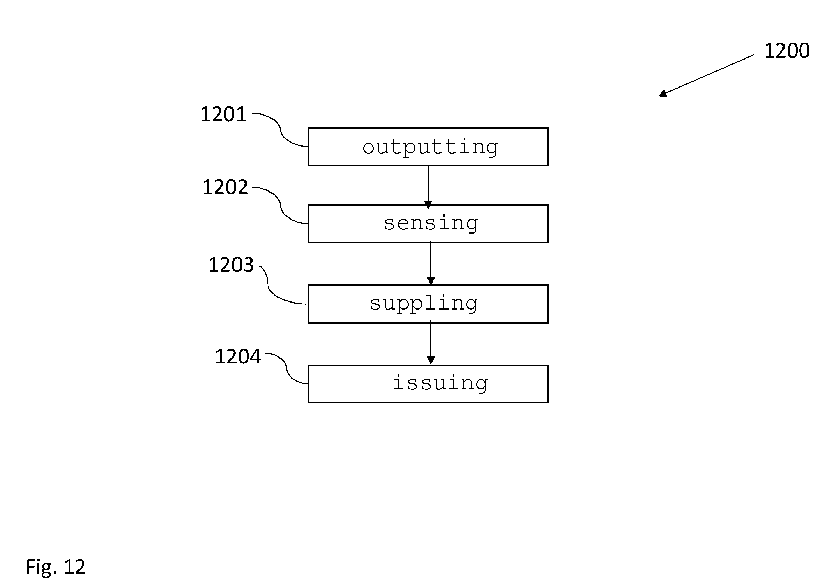

Fig. 12 shows a schematic flowchart of a method 1200 for supplying an LED load according to an embodiment.

The method 1200 comprises the following steps.
- outputting 1201 by an actively switched power factor correction, PFC, circuit 101 a DC voltage which is basis for a DC supply voltage of a switched DC/DC converter 102 configured to supply the LED load 103 with a feedback-controlled output current;
- sensing 1202 a value representing the output current with a sampling frequency by a means for sampling;
- suppling 1203 with a sampling frequency the value representing the output current to a feedback control unit of the LED converter 100; and
- issuing 1204 a control signal for at least one switch of the switched DC/DC converter 102, wherein the PFC circuit 101 and the switched DC/DC converter 102 are designed such that a difference between a switching frequency of the DC/DC switched converter 102 and the sampling frequency of the means for supply is higher than a first preset value.

The invention is defined by the appended claims.

Further variations and modifications are possible within the scope of these claims.

## Claims

1. LED converter (100), comprising:
- an actively switched power factor correction, PFC, circuit (101) outputting a DC voltage which is basis for a DC supply voltage of a switched DC/DC converter (102) of the LED converter (100), configured to supply an LED load (103) with a feedback-controlled output current said DC/DC converter (102) being configured to operate with frequency control, and a controller (801, 802),
**characterized by**
- means for sampling (104) configured to sample a value representing the output current with a sampling frequency, and to supply it to a feedback control unit (105) of the LED converter (100) which is configured to issue a control signal for at least one switch of the switched DC/DC converter (102), wherein the PFC circuit (101) and the switched DC/DC converter (102) are designed such that a difference between a switching frequency of the DC/DC switched converter (102) and the sampling frequency of the means for sampling (104) is higher than a first preset value,
wherein the controller (801, 802) is configured to control the output DC voltage of the PFC circuit (101) such that an artificial ripple, e.g. a triangular ripple, is dynamically added to the output DC voltage providing a varying output DC voltage, and the controller (801, 802) is further configured to indirectly modify the switching frequency due to the varying output DC voltage, such that the switching frequency of said DC/DC converter (102) is varied.

2. The LED converter (100) of claim 1, wherein the output voltage of the PFC circuit (101) is controlled by a PFC control unit such that the resulting switching frequency is higher than a second preset value or the switching frequency of the switched DC/DC converter (102) is controlled to deviate from a frequency value of the sampling frequency of the means for sampling by a predetermined value.

3. The LED converter (100) of any one of the preceding claims, wherein the DC/DC converter (102) is a half-bridge LLC, flyback or buck converter.

4. The LED converter (100) of any one of the preceding claims, wherein the means for sampling comprises an analog-to-digital, ADC, converter (602).

5. The LED converter (100) of any one of the preceding claims, wherein the LED converter (100) comprises an electromagnetic interference, EMI, filter (501).

6. The LED converter (100) of any one of the preceding claims, wherein the LED converter (100) comprises an isolation stage (507).

7. The LED converter (100) of claim 6, wherein the LED converter (100) comprises a rectifying and sensing unit (504) on a secondary side of the isolation stage (507) configured to rectify and sense a current supplied to the LED load (103).

8. Luminaire comprising the LED converter (100) of any one of the claims 1 to 7.

9. Method (1200) for supplying an LED load (103), comprising:
- outputting (1201) by an actively switched power factor correction, PFC, circuit (101) a DC voltage which is basis for a DC supply voltage of a switched DC/DC converter (102) configured to supply the LED load (103) with a feedback controlled output current, said DC/ DC converter (102) being configured to operate with frequency control,
**characterized by**
- sensing (1202) a value representing the output current with a sampling frequency;
- suppling (1203) the value representing the output current to a feedback control unit (105) of the LED converter (100); and
- issuing (1204) a control signal for at least one switch of the switched DC/DC converter (102), wherein the PFC circuit (101) and the switched DC/DC converter (102) are designed such that a difference between a switching frequency of the DC/DC switched converter (102) and the sampling frequency of a means for sampling is higher than a first preset value;
- controlling, by a controller (801, 802), the output DC voltage of the PFC circuit (101) such that an artificial ripple, e.g. a triangular ripple, is dynamically added to the output DC voltage providing a varying output DC voltage, wherein the controller (801, 802) is further configured to indirectly modify the switching frequency due to the varying output DC voltage, such that the switching frequency of said DC/DC converter (102) is varied.

## Patentansprüche

1. LED-Wandler (100), umfassend:
- eine aktiv geschaltete Leistungsfaktorkorrekturschaltung, PFC-Schaltung, (101), die eine Gleichstromspannung ausgibt, die die Basis für eine Gleichstromzuführspannung eines geschalteten Gleichstrom/Gleichstrom-Wandlers (102) des LED-Wandlers (100) ist, der konfiguriert ist, um eine LED-Last (103) mit einem rückkopplungsgesteuerten Ausgabestrom zu versorgen, wobei der Gleichstrom/Gleichstrom-Wandler (102) konfiguriert ist, um mit Frequenzsteuerung betrieben zu werden, und eine Steuerung (801, 802),
**gekennzeichnet durch**
- Mittel zum Abtasten (104), die konfiguriert sind, um einen Wert, der den Ausgabestrom darstellt, mit einer Abtastfrequenz abzutasten und ihn einer Rückkopplungssteuereinheit (105) des LED-Wandlers (100) zuzuführen, die konfiguriert ist, um ein Steuersignal für mindestens einen Schalter des geschalteten Gleichstrom/Gleichstrom-Wandlers (102) zu liefern, wobei die PFC-Schaltung (101) und der geschaltete Gleichstrom/Gleichstrom-Wandler (102) derart ausgelegt sind, dass eine Differenz zwischen einer Schaltfrequenz des geschalteten Gleichstrom/Gleichstrom-Wandlers (102) und der Abtastfrequenz des Mittels zum Abtasten (104) höher als ein erster voreingestellter Wert ist,
wobei die Steuerung (801, 802) konfiguriert ist, um die Ausgabegleichstromspannung der PFC-Schaltung (101) derart zu steuern, dass eine künstliche Welligkeit, z. B. eine dreieckige Welligkeit, dynamisch zu der Ausgabegleichstromspannung hinzugefügt wird, wobei eine variierende Ausgabegleichstromspannung bereitgestellt wird, und die Steuerung (801, 802) ferner konfiguriert ist, um die Schaltfrequenz aufgrund der variierenden Ausgabegleichstromspannung indirekt derart zu ändern, dass die Schaltfrequenz des Gleichstrom/Gleichstrom-Wandlers (102) variiert wird.

2. LED-Wandler (100) nach Anspruch 1, wobei die Ausgabespannung der PFC-Schaltung (101) durch eine PFC-Steuereinheit derart gesteuert wird, dass die resultierende Schaltfrequenz höher als ein zweiter voreingestellter Wert ist, oder die Schaltfrequenz des geschalteten Gleichstrom/Gleichstrom-Wandlers (102) gesteuert wird, um von einem Frequenzwert der Abtastfrequenz des Mittels zum Abtasten um einen vorgegebenen Wert abzuweichen.

3. LED-Wandler (100) nach einem der vorstehenden Ansprüche, wobei der Gleichstrom/Gleichstrom-Wandler (102) ein Halbbrücken-LLC-, Sperr- oder Abwärtswandler ist.

4. LED-Wandler (100) nach einem der vorstehenden Ansprüche, wobei das Mittel zum Abtasten einen Analog-Digital-Wandler, ADC-Wandler, (602) umfasst.

5. LED-Wandler (100) nach einem der vorstehenden Ansprüche, wobei der LED-Wandler (100) einen elektromagnetischen Interferenzfilter, EMI-Filter, (501) umfasst.

6. LED-Wandler (100) nach einem der vorstehenden Ansprüche, wobei der LED-Wandler (100) eine Isolationsstufe (507) umfasst.

7. LED-Wandler (100) nach Anspruch 6, wobei der LED-Wandler (100) eine Gleichrichter- und Erfassungseinheit (504) auf einer Sekundärseite der Isolationsstufe (507) umfasst, die konfiguriert ist, um einen Strom gleichzurichten und zu erfassen, der der LED-Last (103) zugeführt wird.

8. Leuchte, umfassend den LED-Wandler (100) nach einem der Ansprüche 1 bis 7.

9. Verfahren (1200) zum Zuführen einer LED-Last (103), umfassend:
- Ausgeben (1201), durch eine aktiv geschaltete Leistungsfaktorkorrekturschaltung, PFC-Schaltung, (101), einer Gleichstromspannung, die die Basis für eine Gleichstromzuführspannung eines geschalteten Gleichstrom/Gleichstrom-Wandlers (102) ist, der konfiguriert ist, um die LED-Last (103) mit einem rückkopplungsgesteuerten Ausgabestrom zu versorgen, wobei der Gleichstrom/Gleichstrom-Wandler (102) konfiguriert ist, um mit Frequenzsteuerung betrieben zu werden,
**gekennzeichnet durch**
- Erfassen (1202) eines Werts, der den Ausgabestrom darstellt, mit einer Abtastfrequenz;
- Zuführen (1203) des Werts, der den Ausgabestrom darstellt, an eine Rückkopplungssteuereinheit (105) des LED-Wandlers (100); und
- Liefern (1204) eines Steuersignals für mindestens einen Schalter des geschalteten Gleichstrom/Gleichstrom-Wandlers (102), wobei die PFC-Schaltung (101) und der geschaltete Gleichstrom/Gleichstrom-Wandler (102) derart ausgelegt sind, dass eine Differenz zwischen einer Schaltfrequenz des geschalteten Gleichstrom/Gleichstrom-Wandlers (102) und der Abtastfrequenz eines Mittels zum Abtasten höher als ein erster voreingestellter Wert ist;
- derartiges Steuern, durch eine Steuerung (801, 802), der Ausgabegleichstromspannung der PFC-Schaltung (101), dass eine künstliche Welligkeit, z. B. eine dreieckige Welligkeit, dynamisch zu der Ausgabegleichstromspannung hinzugefügt wird, wobei eine variierende Ausgabegleichstromspannung bereitgestellt wird, wobei die Steuerung (801, 802) ferner konfiguriert ist, um die Schaltfrequenz aufgrund der variierenden Ausgabegleichstromspannung indirekt derart zu ändern, dass die Schaltfrequenz des Gleichstrom/Gleichstrom-Wandlers (102) variiert wird.

## Revendications

1. Convertisseur à DEL (100), comprenant :
- un circuit (101) de correction de facteur de puissance, PFC, à commutation active délivrant une tension continue (CC) qui sert de base à une tension d'alimentation CC d'un convertisseur CC/CC commuté (102) du convertisseur à DEL (100), configuré pour alimenter une charge de DEL (103) avec un courant de sortie commandé par rétroaction, ledit
convertisseur CC/CC (102) étant configuré pour fonctionner avec une commande de fréquence, et un dispositif de commande (801, 802),
**caractérisé par**
- un moyen d'échantillonnage (104) configuré pour échantillonner une valeur représentant le courant de sortie avec une fréquence d'échantillonnage, et pour la fournir à une unité de commande de rétroaction (105) du convertisseur à DEL (100) qui est configurée pour émettre un signal de commande pour au moins un commutateur du convertisseur CC/CC commuté (102), dans lequel le circuit PFC (101) et le convertisseur CC/CC commuté (102) sont conçus de telle sorte qu'une différence entre une fréquence de commutation du convertisseur CC/CC commuté (102) et la fréquence d'échantillonnage du moyen d'échantillonnage (104) est supérieure à une première valeur préréglée,
dans lequel le dispositif de commande (801, 802) est configuré pour commander la tension CC de sortie du circuit PFC (101) de telle sorte qu'une ondulation artificielle, par exemple une ondulation triangulaire, est ajoutée dynamiquement à la tension CC de sortie fournissant une tension CC de sortie variable, et le dispositif de commande (801, 802) est en outre configuré pour modifier indirectement la fréquence de commutation en raison de la tension CC de sortie variable, de telle sorte que la fréquence de commutation dudit convertisseur CC/CC (102) est amenée à varier.

2. Convertisseur à DEL (100) selon la revendication 1, dans lequel la tension de sortie du circuit PFC (101) est commandée par une unité de commande PFC de telle sorte que la fréquence de commutation résultante est supérieure à une seconde valeur prédéfinie ou que la fréquence de commutation du convertisseur CC/CC commuté (102) est commandée pour s'écarter d'une valeur de fréquence de la fréquence d'échantillonnage du moyen d'échantillonnage d'une valeur prédéterminée.

3. Convertisseur à DEL (100) selon l'une quelconque des revendications précédentes, dans lequel le convertisseur CC/CC (102) est un convertisseur LLC en demi-pont, à transfert indirect ou abaisseur de tension.

4. Convertisseur à DEL (100) selon l'une quelconque des revendications précédentes, dans lequel le moyen d'échantillonnage comprend un convertisseur analogique-numérique, ADC, (602).

5. Convertisseur à DEL (100) selon l'une quelconque des revendications précédentes, dans lequel le convertisseur à DEL (100) comprend un filtre d'interférence électromagnétique, EMI, (501).

6. Convertisseur à DEL (100) selon l'une quelconque des revendications précédentes, dans lequel le convertisseur à DEL (100) comprend un étage d'isolement (507).

7. Convertisseur à DEL (100) selon la revendication 6, dans lequel le convertisseur à DEL (100) comprend une unité de redressement et de détection (504) sur un côté secondaire de l'étage d'isolement (507) configuré pour redresser et détecter un courant fourni à la charge de DEL (103).

8. Luminaire comprenant le convertisseur à DEL (100) selon l'une quelconque des revendications 1 à 7.

9. Procédé (1200) permettant d'alimenter une charge de DEL (103), comprenant :
- la délivrance (1201) par un circuit (101) de correction de facteur de puissance, PFC, à commutation active d'une tension CC qui sert de base à une tension d'alimentation CC d'un convertisseur CC/CC commuté (102) configuré pour alimenter la charge de DEL (103) avec un courant de sortie commandée par rétroaction, ledit convertisseur CC/CC (102) étant configuré pour fonctionner avec une commande de fréquence,
**caractérisé par**
- la détection (1202) d'une valeur représentant le courant de sortie avec une fréquence d'échantillonnage ;
- la fourniture (1203) de la valeur représentant le courant de sortie à une unité de commande de rétroaction (105) du convertisseur à DEL (100) ; et
- l'émission (1204) d'un signal de commande pour au moins un commutateur du convertisseur CC/CC commuté (102), dans lequel le circuit PFC (101) et le convertisseur CC/CC commuté (102) sont conçus de telle sorte qu'une différence entre une fréquence de commutation du convertisseur CC/CC commuté (102) et la fréquence d'échantillonnage d'un moyen d'échantillonnage est supérieure à une première valeur prédéfinie ;
- la commande, par un dispositif de commande (801, 802), de la tension CC de sortie du circuit PFC (101) de telle sorte qu'une ondulation artificielle, par exemple une ondulation triangulaire, est ajoutée dynamiquement à la tension CC de sortie fournissant une tension CC de sortie variable, dans lequel le dispositif de commande (801, 802) est en outre configuré pour modifier indirectement la fréquence de commutation en raison de la tension CC de sortie variable, de telle sorte que la fréquence de commutation dudit convertisseur CC/CC (102) est amenée à varier.
